# EUROPEAN PATENT APPLICATION

(11) **EP 4 596 643 A1**
(43) Date of publication of application: **06.08.2025**
(21) Application number: 24154617.5
(22) Date of filing: 30.01.2024
(51) Int. Cl.: C09D 11/50, C09D 11/102

(54) **INK, METHOD, DECOR UNIT, LIVING SPACE COMPONENT**

(71) Applicant: Interprint GmbH, 59707 Arnsberg (DE)
(72) Inventor: David, Robert, 59494 Soest (DE)
(74) Representative: Fritz Patent- und Rechtsanwälte PartmbB

(57) **Abstract**

The invention relates to an ink (1) comprising: at least one plurality of effect pigments (3): and at least one binder (4) for binding the effect pigments (3). It comprises at least a second binder (5) for producing a permanent bond with a plastic material (2). The invention further relates to a method for producing a decor unit (100) by means of such an ink, a decor unit (100) produced according to the method and a living space component (1000) with such a decor unit (100).

## Description

The present invention relates to an ink with effect pigments, a method for producing a decor unit with a coating of such an ink and a living space component with such a decor unit.

Living space elements like furniture, flooring or doors may be made of coatings with laminated paper or film which are printed with a decor. The decor may be a wood structure, a stone, a fancy decor or a plain color. Effect pigments in the printed ink can reflect some of the light, they shimmer like mother-of-pearl or change the coloration depending on the view angle. Also a combination of ink layers with effect pigments and ink layers with no effect pigments is widely used.

Here inks can comprise a binder to bind effect pigments. Inks with effect pigments are printed on paper or film materials. Such decor units can further be processed into furniture parts. For usage for flooring boards an additional protective layer is required, which cancels out the shimmer or coloration changing effect due to a lack of transparency.

Inks with effect pigments are wide used for printing decors on paper. The adhesion of the ink to thermoplastic film material was found to be to weak.

Therefore EP4190553A1 shows a thermoplastic material that is coated with a lacquer that contains effect pigments. An additional thermoplastic film is covering the lacquer layer. Lacquers are very cost intensive and the product shows a plain colored surface only.

In view of this, it is the objective of the present invention to provide a way of making coatings with effect pigments at least for flooring boards. In particular, the invention should be realizable at low cost and especially with also multi colored decors.

The objective is solved by an ink with the features according to claim 1, a method with the features according to claim 6, a decor unit according to claim 12 and a living space component according to claim 15. Preferred further embodiments are the subject of the dependent claims. Further features and advantages result from the general description and the description of the exemplary embodiment.

The ink according to the invention comprises:
- one plurality of effect pigments; and
- one binder for binding the effect pigments.
At least one second binder is included to create a permanent bond with a thermoplastic material.

The invention has many advantages. A significant advantage of the invention is that the ink with the two binders makes it possible to produce a durable and wear-resistant bond of the ink with the effect pigments and a thermoplastic material. It is particularly surprising that the two binders do not interact in a way that has a negative effect on the bonding of the effect pigments within the ink or the bonding of the ink to the thermoplastic material. Furthermore, the ink can still be processed using the same machines as for paper material. The invention allows an advantageously cheap production of flooring boards with an ink with effect pigments compared to solutions known from prior art.

It is particularly preferred that the effect pigments, especially in the form of mica, are at least substantially coated with titanium oxide. Advantageously, a large number of different effect pigments can be used in the coating. In addition, a coating with titanium oxide can be produced cost-effectively. Also pigments based on metals like copper, zinc and aluminum or alloys like brass or the like can be used as effect pigments.

The binder for binding the effect pigments is particularly preferably a polyurethane-based binder. Advantageously, the polyurethane-based binder enables effect pigments coated with titanium oxide to adhere favorably to the substrate. Furthermore, the polyurethane-based binder does not negatively interact with the other components of the ink and the other binders.

Preferably, the binder for producing a permanent bond with the at least one thermoplastic material comprises at least one acrylate. Advantageously, a binder with an acrylate makes it possible to produce a durable and wear-resistant adhesion of the ink to the thermoplastic material. The adhesion to a polyvinyl chloride, for example, is particularly good.

In particular, the binder for producing a permanent bond with the thermoplastic material is present in a proportion of between 20 % and almost 100 %, preferably between 30 % and 70 % and particularly preferably between 40 % and 65 % in relation to a volume proportion and/or a mass proportion in the ink. Concentrations of less than 20 % are also possible. In particular, a concentration is dependent on a specific application. In particular, as little of the binder is added to produce a permanent bond with the thermoplastic material as is necessary for the application in question, but at least as much as is necessary to produce the corresponding permanent adhesion and wear-resistant bond.

Further preferred embodiments of the ink can be derived from the entire general description and from the description of the exemplary embodiment.

The method according to the invention for producing at least one decor unit comprises at least one thermoplastic material with at least one permanently bonded and at least partially opaque ink layer of a ink, in particular an ink described above, with effect pigments, comprises at least the following method steps:
- providing the thermoplastic material; and
- coating at least one surface of the thermoplastic material with at least one layer of the ink with effect pigments.

The method according to the invention also has many advantages. A significant advantage of the process is that it can be manufactured by coating the thermoplastic material. Advantageously the layer can be at least partially opaque.

Preferably, the thermoplastic material comprises at least essentially a polyvinyl chloride. Thermoplastics and in particular polyvinyl chloride advantageously have a high availability and a high durability. In addition, the thermoplastic may also comprise polyethylene terephthalate (PET) and polyethylene (PE), polyvinyl alcohol (PVA), polypropylene (PP), polymethylmethacrylate (PMMA) or other thermoplastics. Thermoplastics are easy to form, even repeatedly, e.g. into a film or the like. This makes thermoplastics particularly cost-effective to process.

In particular, the thermoplastic material is designed as a film or the like. In particular, films are easy and inexpensive to coat. In addition, the plastic material can also be in another form, e.g. as a sheet or the like.

Particularly preferred is at least this coating by means of at least one printing process, in particular at least one gravure printing process, flexographic printing process, digital printing process and/or the like. Alternatively or additionally, a coating can be carried out at least by a curtain coating process or kiss coating process or the like. Advantageously, all processes are particularly suitable for films or foils and can be carried out cost-effectively at least for this purpose. Advantageously, the coating is applied by a printing unit or another suitable coating device.

Preferably, at least the ink layer, in particular the decor unit, is at least partially dried after coating at a temperature between 20°C and 70°C, preferably between 30°C and 65°C and particularly preferably at a temperature between 40°C and 60°C. Even higher drying temperatures are also possible. Preferably, the coating is dried in a dryer. Advantageously, a uniform and gentle drying of the ink layer is made possible at the specified temperatures.

Advantageously, at least the ink layer, preferably the decor unit, is dried for between 1 and 30 seconds, preferably between 5 and 20 seconds and particularly preferably between 10 and 15 seconds. Even longer drying times are also possible. Advantageously, the drying time enables at least one solidification of the coating. Advantageously, the ink layer is completely dried. In particular, the at least one layer of ink is dried until the decor unit can be further processed and, in particular, wound onto a roll.

Preferably, the decor unit cures or rests at least several hours after coating, in particular at least 12 hours, preferably at least 24 hours and particularly preferably at least 36 hours before further processing. Even longer curing times are advantageously possible. Advantageously, this allows the ink layer to form a permanent and strong bond with the thermoplastic material.

Further preferred embodiments of the method can be derived from the overall general description and from the description of the embodiment example.

The decor unit according to the invention is manufactured according to a method described above. In addition, further process steps may in particular be included.

The decor unit according to the invention also has many advantages. A significant advantage of the decor unit is that the decor unit can be used to produce living space components with an ink with effect pigments.

In particular, at least two ink layers are included, which extend at least partially on top of each other, in particular directly touching each other. In addition, further ink layers are possible, which in particular can also include other ink compositions. Advantageously, mixed inks can be realized cost-effectively by superimposing ink layers.

In particular, at least one ink layer or at least one, in particular separate, adhesion promoter layer is included, which essentially or almost completely covers the at least one surface of the thermoplastic material. In particular, a full-surface coating can be produced cost-effectively, for example by at least one of the coating processes described above. In addition, it is also possible for a layer of ink to only partially cover the at least one surface of the plastic material. Advantageously, a separate adhesion promoter layer can ensure adhesion between the ink and the thermoplastic material.

Further advantageous embodiments of the decor unit can be derived from the overall general description and from the description of the exemplary embodiment.

The living space component according to the invention comprises at least one decor unit as described above and at least one carrier unit. In particular, the decor unit is firmly connected to the carrier unit. Advantageously, the decor unit and the carrier unit are at least partially bonded, laminated or the like.

The living space component according to the invention also has many advantages. It is particularly advantageous that the inks with effect pigments can also be used for floor coverings thanks to the living space component.

Preferably, the carrier unit is formed at least in some areas as at least one high-density fiberboard (HDF), medium-density fiberboard (MDF), chipboard, plastic board made of polypropylene, polyvinyl chloride or the like. Advantageously, these forms of carrier units are particularly cost-effective and economical to manufacture.

Preferably, the living space component comprises at least one wear layer. It is particularly preferred that at least one wear protection layer made of polypropylene, polyvinyl chloride or polyethylene terephthalate is applied to the decor unit and, in particular, bonded to the decor unit. Advantageously, the wear protection layer enables the wear of the decor unit to be minimized and the durability to be increased, while the effect pigments remain visually visible. Preferably, the wear protection layer is applied by lamination or laminating. In particular, the wear protection layer is printed or coated, preferably using a reverse printing process.

Preferably, the living space component comprises at least one lacquer layer. Advantageously, the lacquer layer is arranged above the ink layer. Advantageously, the lacquer layer can enable the ink effects of the effect pigments to be accentuated even better.

In particular, the lacquer layer comprises at least one UV-curing lacquer and/or an electron beam-curing lacquer. Advantageously, such lacquers are particularly durable and therefore also suitable for floor coverings such as flooring boards.

Preferably, the living space component is designed as a floor element, such as a flooring board. Advantageously, the optical properties of the effect pigments can appear visually. In addition, the furniture component can also be designed as a furniture part, such as a furniture wall of a piece of furniture and/or a furniture door or the like.

Further advantageous embodiments of the furniture component can be derived from the overall general description and from the description of the exemplary embodiment.

Further features and advantages of embodiments of the invention are described below with reference to the drawings. The same reference signs are used for identical or similar parts and for parts with identical or similar functions. It shows:

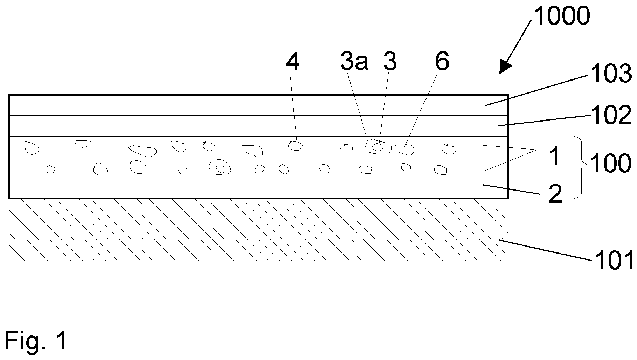

- Fig. 1: shows a sectional view of a living space component according to the invention.

It is not necessary for a living space component 1000 according to the invention, a decor unit 100 according to the invention, a method according to the invention and an ink 1 according to the invention to have all the features described below. It is also possible for a living space component 1000 according to the invention, a decor unit 100 according to the invention, a method according to the invention and an ink 1 according to the invention to have only individual features of the embodiment example described below.

Fig. 1 shows a sectional view of a living space component 1000 according to the invention with a decor layer 100 produced by the method according to the invention using an ink 1 according to the invention.

The living space component 1000 is designed here as a flooring board 1000. The living space component 1000 here comprises a carrier unit 101, onto which the decor unit 100 is laminated. A wear protection layer 102 is applied to the decor unit 100, which has an embossing, in this case a wood grain. A lacquer layer 103 consisting of a UV-curing lacquer 103 is applied to the wear protection layer 102.

The decor unit 100 comprises a thermoplastic material 2, which is designed here as a PVC film 2 and is coated with an ink 1 with effect pigments 3. The ink 1 with the effect pigments 3 has a binder 4 for binding the effect pigments 3. The binder 4 for binding the effect pigments 3 is here polyurethane-based, which binds the mica 3 coated with titanium oxide 3a in the ink 1. In addition, a binder 5 is provided to create a permanent bond with the thermoplastic material 2. The binder 5 for creating a permanent bond with the thermoplastic material 2 here comprises an acrylate, which improves the adhesion of the ink 1 to the PVC. The binder 5 for producing a permanent bond with the plastic material 2 is present here in a concentration of approximately 50 %.

To produce the decor unit 100, the plastic material 2 is coated with the ink 1 using a gravure printing process. After printing, the ink layer 1 is dried at approx. 50°C for approx. 10 seconds until it is solidified. The decor unit 100 is then left to rest for 24 hours before further processing. This ensures a permanent and wear-resistant bond between the thermoplastic material 2 and the ink 1 with the effect pigments 3. The wear protection layer 102 and the lacquer layer 103 are transparent so that the ink pigments 3 can visibly reflect incident light. This makes it possible to use the ink 1 with effect pigments 3 for living room components 1000 such as flooring boards 1000.

### Reference signs:

- 1: ink, ink layer
- 2: thermoplastic material, PVC
- 3: effect pigments, mica
- 3a: titanium oxide coating
- 4: binder for binding the effect pigments
- 5: binder for creating a permanent bond with the thermoplastic material
- 100: decor unit
- 101: carrier unit
- 102: wear protection layer
- 103: lacquer, lacquer layer
- 1000: living space component, flooring board, furniture wall, furniture door

## Claims

1. Ink (1) comprising:
- one plurality of effect pigments (3),
- one binder (4) for binding the effect pigments (3),
**characterized in**
**that** at least one second binder (5) for producing a permanent bond with a thermoplastic material (2) is included.

2. Ink (1) according to claim 1, wherein the binder (4) for binding the effect pigments (3), in particular in the form of mica coated with at least titanium oxide (3a), copper, zinc, aluminum or alloys like brass, is a polyurethane-based binder.

3. Ink (1) according to any one of the preceding claims, wherein the binder (5) for forming a permanent bond with the at least one thermoplastic material (2) comprises at least one acrylate.

4. Ink (1) according to one of the preceding claims, wherein the binder (5) for producing a permanent bond with the thermoplastic material (2) is present in a proportion of between 20% and almost 100%, preferably between 30% and 70% and particularly preferably between 40% and 65% by volume and/or by mass.

5. Method for producing at least one decor unit (100) comprising at least one thermoplastic material (2) with at least one permanently bonded and at least partially covering ink layer (1) of an ink (1) with effect pigments (3) according to one of the preceding claims, comprising at least the following method steps:
- providing the thermoplastic material (2); and
- coating of at least one surface of the thermoplastic material (2) with at least one ink layer (1) of the ink (1) with effect pigments (3).

6. Method according to the preceding claim, wherein the thermoplastic material (2) comprises at least one thermoplastic web, in particular a polyvinyl chloride web.

7. Method according to one of the two preceding claims, wherein the coating is carried out by means of a gravure printing process, screen printing process, flexographic printing process, curtain coating process or kiss coating process.

8. Method according to one of the three preceding claims, wherein at least the ink layer (1) after coating is at least partially dried at a temperature between 20°C and 70°C, preferably between 30°C and 65°C and particularly preferably at a temperature between 40°C and 60°C.

9. Method according to the preceding claim, wherein the ink layer (1) is dried for between 1 and 30 seconds, preferably 5 and 20 seconds and particularly preferably between 10 and 15 seconds.

10. Method according to one of the four preceding claims, wherein the decor unit (100) cures after coating for at least 12 hours, preferably 24 hours and particularly preferably 36 hours before further processing.

11. Decor unit (100) manufactured according to a method according to one of the five preceding claims.

12. Living space component (1000), comprising at least one decor unit (100) according to one of the three preceding claims and at least one carrier unit (101), and wherein the decor unit (100) is firmly connected to the carrier unit (101).

13. Living space component (1000) according to one of the two preceding claims, comprising at least one wear protection layer (102).

14. A living space component (1000) according to any one of the four preceding claims, comprising at least one lacquer layer (103).

15. Living space component (1000) designed as a furniture part, such as a furniture wall (1000) and/or a furniture door (1000), or as a floor element, such as a flooring board (1000).

## Amended claims

### Amended claims in accordance with Rule 137(2) EPC.

1. Method for producing at least one decor unit (100) comprising at least one thermoplastic material (2) with at least one permanently bonded and at least partially covering ink layer (1) of an ink (1) comprising one plurality of effect pigments (3), one binder (4) for binding the effect pigments (3), and at least one second binder (5) for producing a permanent bond with a thermoplastic material (2) is included with effect pigments (3) according to one of the preceding claims, comprising at least the following method steps:
- providing the thermoplastic material (2); and
- coating of at least one surface of the thermoplastic material (2) with at least one ink layer (1) of the ink (1) with effect pigments (3).

2. Method according to the preceding claim, wherein the thermoplastic material (2) comprises at least one thermoplastic web, in particular a polyvinyl chloride web.

3. Method according to one of the two preceding claims, wherein the coating is carried out by means of a gravure printing process, screen printing process, flexographic printing process, curtain coating process or kiss coating process.

4. Method according to one of the three preceding claims, wherein at least the ink layer (1) after coating is at least partially dried at a temperature between 20°C and 70°C, preferably between 30°C and 65°C and particularly preferably at a temperature between 40°C and 60°C.

5. Method according to the preceding claim, wherein the ink layer (1) is dried for between 1 and 30 seconds, preferably 5 and 20 seconds and particularly preferably between 10 and 15 seconds.

6. Method according to one of the five preceding claims, wherein the decor unit (100) cures after coating for at least 12 hours, preferably 24 hours and particularly preferably 36 hours before further processing.

7. Decor unit (100) manufactured according to a method according to one of the six preceding claims.

8. Living space component (1000), comprising at least one decor unit (100) according to one of the preceding claim and at least one carrier unit (101), and wherein the decor unit (100) is firmly connected to the carrier unit (101).

9. Living space component (1000) according to the preceding claim, comprising at least one wear protection layer (102).

10. Living space component (1000) according to any one of the two preceding claims, comprising at least one lacquer layer (103).

11. Living space component (1000) according to any of the three preceding claims, designed as a furniture part, such as a furniture wall (1000) and/or a furniture door (1000), or as a floor element, such as a flooring board (1000).
